# EUROPÄISCHE PATENTANMELDUNG

(11) **EP 4 841 101 A1**
(43) Veröffentlichungstag der Anmeldung: **18.11.2026**
(21) Anmeldenummer: 25175964.3
(22) Anmeldetag: 13.05.2025
(51) Int. Cl.: F03D 1/06, B29D 99/00

(54) **VERFAHREN ZUM HERSTELLEN EINES ROTORBLATTS UND VERBINDUNGSELEMENT ZUM VERBINDEN VON ROTORBLATTSEGMENTEN**

(71) Anmelder: Wobben Properties GmbH, 26607 Aurich (DE)
(72) Erfinder: Spieth, Falk, 26603 Aurich (DE)
(74) Vertreter: Eisenführ Speiser

(57) **Zusammenfassung**

Die Erfindung betrifft ein Verfahren zum Herstellen eines Rotorblatts für eine Windenergieanlage und ein Verbindungselement (300). Das Verfahren (400) umfasst: Bereitstellen (410) eines ersten Rotorblattsegments (200a) mit einer ersten Trennstelle (200at), die einen ersten geschäfteten Abschnitt (210as, 211as, 215as, 281as) aufweist; Bereitstellen (420) eines zweiten Rotorblattsegments (200b) mit einer zweiten Trennstelle (200bt), die einen zweiten geschäfteten Abschnitt (210bs, 211bs, 215bs, 281bs) aufweist; Bereitstellen (430) eines Verbindungselements (300), das einen ersten geschäfteten Verbindungsabschnitt (310as, 311as, 315as, 381as) zur Verbindung mit dem ersten geschäfteten Abschnitt und einen zweiten geschäfteten Verbindungsabschnitt (310bs, 311bs, 315bs, 381bs) zur Verbindung mit dem zweiten geschäfteten Abschnitt aufweist; Anordnen (450) des Verbindungselements (300) derart, dass der erste geschäftete Verbindungsabschnitt an dem ersten geschäfteten Abschnitt der ersten Trennstelle und der zweite geschäftete Verbindungsabschnitt an dem zweiten geschäfteten Abschnitt der zweiten Trennstelle anliegt; Durchführen (460) eines Infusionsverfahrens, wobei flüssiges Harz zwischen das Verbindungselement und die Trennstellen gezogen wird.

## Beschreibung

Die Erfindung betrifft ein Verfahren zum Herstellen eines Rotorblatts für eine Windenergieanlage. Ferner betrifft die Erfindung ein Verbindungselement zum Verbinden eines ersten Rotorblattsegments und eines zweiten Rotorblattsegments eines Rotorblatts für eine Windenergieanlage.

Die Länge von Rotorblättern für Windenergieanlagen hat in den vergangenen Jahren deutlich zugenommen. Moderne Rotorblätter weisen typischerweise Längen von über 50 Metern, häufig von über 70 Metern, teilweise sogar über 100 m, auf. Solche Dimensionen der Rotorblätter stellen eine große Herausforderung für die Logistik dar. Insbesondere der Transport von Rotorblättern auf der Straße ist aufgrund der großen Längen häufig aufwendig. Einige Standorte können aufgrund der Dimensionen der Rotorblätter gar nicht oder nur mit unverhältnismäßig großem Aufwand erreicht werden.

Um den Transport des Rotorblatts zu erleichtern, ist es bekannt, zwei voneinander getrennte Rotorblattsegmente herzustellen, diese Rotorblattsegmente getrennt voneinander zum Aufstellort zu transportieren und erst am Aufstellort mittels Schraub- oder Bolzenverbindungen miteinander zu verbinden. Zwar wird dadurch der Transport des Rotorblatts aufgrund der deutlich reduzierten Transportlänge deutlich erleichtert. Eine Herausforderung besteht dabei allerdings darin, eine zuverlässige Verbindung zwischen den Rotorblattsegmenten zu herzustellen. Bekannte Verbindungen zwischen Rotorblattsegmenten weisen in der Regel ein hohes Gewicht auf, was Nachteilig für die Funktion des Rotorblatts ist. Ferner sind bekannte Verbindungen zwischen Rotorblattsegmenten in der Regel mit hohen Kosten verbunden, da insbesondere die Materialkosten für die für die Verbindung verwendeten Verbindungselemente relativ hoch sind.

Der Erfindung liegt daher die Aufgabe zugrunde, eine verbesserte Lösung bereitzustellen, welche die genannten Probleme adressiert. Insbesondere ist es Aufgabe der Erfindung, eine Lösung bereitzustellen, mit der der Transport von Rotorblättern zum Aufstellort erleichtert wird, ohne dadurch hohe Herstellungskosten zu verursachen.

Gemäß einem ersten Aspekt wird die Aufgabe gelöst durch ein Verfahren nach Anspruch 1. Demnach ist ein Verfahren zum Herstellen eines Rotorblatts für eine Windenergieanlage vorgesehen, das folgende Schritte umfasst: Bereitstellen eines ersten Rotorblattsegments, das eine erste Trennstelle aufweist, die einen ersten geschäfteten Abschnitt aufweist; Bereitstellen eines zweiten Rotorblattsegments, das eine zweite Trennstelle aufweist, die einen zweiten geschäfteten Abschnitt aufweist; Bereitstellen eines Verbindungselements, das einen ersten geschäfteten Verbindungsabschnitt zur Verbindung mit dem ersten geschäfteten Abschnitt und einen zweiten geschäfteten Verbindungsabschnitt zur Verbindung mit dem zweiten geschäfteten Abschnitt aufweist; Anordnen des ersten Rotorblattsegments und des zweiten Rotorblattsegments hintereinander entlang einer Rotorblattlängserstreckungsrichtung; Anordnen des Verbindungselements derart, dass der erste geschäftete Verbindungsabschnitt an dem ersten geschäfteten Abschnitt der ersten Trennstelle anliegt und der zweite geschäftete Verbindungsabschnitt an dem zweiten geschäfteten Abschnitt der zweiten Trennstelle anliegt; Durchführen eines Infusionsverfahrens, vorzugsweise Vakuuminfusionsverfahrens, wobei flüssiges Harz mittels Unterdruck zwischen das Verbindungselement und die erste Trennstelle und zwischen das Verbindungselement und die zweite Trennstelle gezogen wird.

Es wird also ein Verfahren vorgeschlagen, beim dem zwei Rotorblattsegmente, die jeweils eine Trennstelle mit geschäftetem Abschnitt aufweisen, und ein Verbindungselement mit zwei geschäfteten Abschnitten bereitgestellt werden und das Verbindungselement derart angeordnet wird, dass die geschäfteten Abschnitte des Verbindungselements an den geschäfteten Abschnitten der hintereinander angeordneten Rotorblattsegmente anliegen, wobei dann mittels eines Infusionsverfahrens flüssiges Harz zwischen das Verbindungselement und die daran anliegenden Trennstellen der Rotorblattsegmente gezogen wird.

Ein Vorteil eines solchen Verfahrens besteht darin, dass keine schweren und teuren metallischen Verbindungselemente für die Verbindung zwischen den Rotorblattsegmenten verwendet werden müssen. So wird das Gewicht des Rotorblatts durch die Verbindung zwischen den Rotorblattsegmenten nicht wesentlich erhöht. Ferner sind die Materialkosten für die Verbindung zwischen den Rotorblattsegmenten im Vergleich zu bekannten Verbindungen deutlich geringer.

Ein weiterer Vorteil besteht darin, dass eine zuverlässige, sichere und langlebige Verbindung zwischen den Rotorblattsegmenten hergestellt werden kann.

Ein weiterer Vorteil ist, dass die aerodynamische Form des Rotorblatts im Bereich der Verbindung der Rotorblattsegmente beibehalten werden kann, sodass aufgrund der Verbindung keine Strömungsverluste auftreten.

Das erste Rotorblattsegment weist vorzugsweise eine Längserstreckung von mindestens 15 m, besonders bevorzugt mindestens 20 m, insbesondere mindestens 25 m, auf. Vorzugsweise weist das erste Rotorblattsegment eine Längserstreckung von höchstens 60 m, besonders bevorzugt höchstens 55 m, insbesondere höchstens 50 m, auf.

Das erste Rotorblattsegment ist vorzugsweise ein Faserverbundbauteil, das Fasern, vorzugsweise Glasfasern und/oder Kohlenstofffasern, und eine Kunststoffmatrix, vorzugsweise eine Epoxidmatrix und/oder eine Polyestermatrix, umfasst.

Das zweite Rotorblattsegment weist vorzugsweise eine Längserstreckung von mindestens 15 m, besonders bevorzugt mindestens 20 m, insbesondere mindestens 25 m, auf. Vorzugsweise weist das zweite Rotorblattsegment eine Längserstreckung von höchstens 60 m, besonders bevorzugt höchstens 55 m, insbesondere höchstens 50 m, auf.

Das zweite Rotorblattsegment ist vorzugsweise ein Faserverbundbauteil ist, das Fasern, vorzugsweise Glasfasern und/oder Kohlenstofffasern, und eine Kunststoffmatrix, vorzugsweise eine Epoxidmatrix und/oder eine Polyestermatrix, umfasst.

Das Rotorblatt weist nach dem Durchführen des Infusionsverfahrens vorzugsweise eine Längserstreckung von mindestens 30 m, besonders bevorzugt mindestens 40 m, insbesondere mindestens 50 m, auf. Vorzugsweise weist das Rotorblatt nach dem Durchführen des Infusionsverfahrens eine Längserstreckung von höchstens 120 m, besonders bevorzugt höchstens 110 m, insbesondere höchstens 100 m, auf.

Das erste Rotorblattsegment und das zweite Rotorblattsegment sind zunächst voneinander getrennt. Das erste Rotorblattsegment und das zweite Rotorblattsegment sind also, bevor sie mittels des Durchführens des Infusionsverfahrens miteinander verbunden werden, voneinander getrennte Bauteile.

Es ist bevorzugt, dass das erste Rotorblattsegment und das zweite Rotorblattsegment unabhängig voneinander hergestellt werden. Alternativ ist es aber auch möglich, dass ein Bauteil in einer Rotorblattform hergestellt wird, aus dem dann anschließend durch Zertrennen dieses Bauteils das erste Rotorblattsegment und das zweite Rotorblattsegment hergestellt werden.

Vorzugsweise werden das erste Rotorblattsegment und das zweite Rotorblattsegment jeweils in einem Vakuuminfusionsverfahren gemeinsam oder getrennt voneinander hergestellt.

Vorzugsweise weist das erste Rotorblattsegment eine Rotorblattwurzel auf, die insbesondere ausgebildet ist zur Herstellung einer Verbindung mit einer Nabe. Vorzugsweise erstreckt sich das erste Rotorblattsegment in seiner Längserstreckung von der Rotorblattwurzel bis zur ersten Trennstelle.

Vorzugsweise weist das zweite Rotorblattsegment eine Rotorblattspitze auf. Vorzugsweise erstreckt sich das zweite Rotorblattsegment in seiner Längserstreckung von der zweiten Trennstelle bis zur Rotorblattspitze.

Die erste Trennstelle weist den ersten geschäfteten Abschnitt auf. Vorzugsweise wird der erste geschäftete Abschnitt mittels Schleifen erzeugt. Die erste Trennstelle ist vorzugsweise zumindest abschnittsweise geschäftet ausgebildet. Es ist auch möglich, dass die erste Trennstelle zusätzlich zu dem ersten geschäfteten Abschnitt noch weitere geschäftete Abschnitte aufweist.

Die zweite Trennstelle weist den zweiten geschäfteten Abschnitt auf. Vorzugsweise wird der zweite geschäftete Abschnitt mittels Schleifen erzeugt. Die zweite Trennstelle ist vorzugsweise zumindest abschnittsweise geschäftet ausgebildet. Es ist auch möglich, dass die zweite Trennstelle zusätzlich zu dem zweiten geschäfteten Abschnitt noch weitere geschäftete Abschnitte aufweist.

Vorzugsweise ist der erste geschäftete Verbindungsabschnitt des Verbindungselements ausgebildet, um eine Verbindung mit dem ersten geschäfteten Abschnitt des ersten Rotorblattsegments herzustellen. Vorzugsweise ist der erste geschäftete Verbindungsabschnitt des Verbindungselements derart geformt, dass er genau an dem ersten geschäfteten Abschnitt des ersten Rotorblattsegments anliegt.

Vorzugsweise ist der zweite geschäftete Verbindungsabschnitt des Verbindungselements ausgebildet, um eine Verbindung mit dem zweiten geschäfteten Abschnitt des zweiten Rotorblattsegments herzustellen. Vorzugsweise ist der zweite geschäftete Verbindungsabschnitt des Verbindungselements derart geformt, dass er genau an dem zweiten geschäfteten Abschnitt des zweiten Rotorblattsegments anliegt.

Das Anordnen des ersten Rotorblattsegments und des zweiten Rotorblattsegments hintereinander entlang der Rotorblattlängserstreckungsrichtung erfolgt vorzugsweise auf eine solche weise, dass sich das erste Rotorblattsegment und das zweite Rotorblattsegment nicht entlang der Rotorblattlängserstreckungsrichtung überlappen. Vorzugsweise werden das erste Rotorblattsegment und das zweite Rotorblattsegment derart angeordnet, dass sie beabstandet zueinander positioniert sind. Es ist aber alternativ auch denkbar, dass zumindest abschnittsweise eine Berührung zwischen dem ersten Rotorblattsegment und dem zweiten Rotorblattsegment stattfindet. Vorzugsweise sind die erste und die zweite Trennstelle aneinander angrenzend, also benachbart zueinander, aber vorzugsweise beabstandet voneinander, angeordnet, wobei das Verbindungselement dann in dem Bereich zwischen dem ersten Rotorblattsegment und dem zweiten Rotorblattsegment platziert wird.

Das flüssige Harz wird beim Durchführen des Infusionsverfahrens vorzugsweise zwischen den ersten geschäfteten Verbindungsabschnitt des Verbindungselements und den ersten geschäfteten Abschnitt des ersten Rotorblattsegments sowie zwischen den zweiten geschäfteten Verbindungsabschnitt des Verbindungselements und den zweiten geschäfteten Abschnitt des zweiten Rotorblattsegments gezogen. Dadurch wird vorzugsweise eine erste Schäftverbindung zwischen dem Verbindungselement und der ersten Trennstelle und eine zweite Schäftverbindung zwischen dem Verbindungselement und der zweiten Trennstelle erzeugt.

Es ist besonders bevorzugt, dass das Verbindungselement trockene Faserhalbzeuge, insbesondere trockene Fasergelege, umfasst, die vor dem Durchführen des Infusionsverfahrens noch nicht mit Harz getränkt sind, wobei beim Durchführen des Infusionsverfahrens die Faserhalbzeuge des Verbindungselements mit Harz imprägniert werden.

Als trockene Faserhalbzeuge werden vorzugsweise übereinandergeschichtete Fasergelege verwendet. Die trockenen Faserhalbzeuge sind vorzugsweise gestuft angeordnet, um dadurch geschäftete Abschnitte im ersten Verbindungsabschnitt und zweiten Verbindungsabschnitt auszubilden.

Vorzugsweise wird beim Durchführen des Infusionsverfahrens, vorzugsweise Vakuuminfusionsverfahrens, das flüssige Harz mittels Unterdruck auch in das Verbindungselement gezogen, sodass die trockenen Faserhalbzeuge des Verbindungselements zusammen mit dem Harz nach dem Aushärten des Harzes einen Faser-Kunststoff-Verbund ausbilden.

Unter einem Infusionieren oder einem Infusionsverfahren ist insbesondere das Tränken des trockenen Fasermaterials mit dem Harzsystem mithilfe eines Unter- bzw. Überdrucks zu verstehen.

Vorzugsweise wird zum Durchführen des Infusionsverfahrens eine Vakuumfolie im Bereich der ersten Trennstelle, der zweiten Trennstelle und des Verbindungselements angeordnet, um diese Abschnitte luftdicht abzuschließen und einen Unterdruck erzeugen zu können. Vorzugsweise wird dabei der Bereich mit einer Vakuumfolie bedeckt, in dem flüssiges Harz infusioniert wird.

Es ist besonders bevorzugt, dass das Verbindungselement bereits vor dem Durchführen des Infusionsverfahrens als zumindest teilweise, vorzugsweise vollständig, ausgehärtetes Faserverbundbauteil, ausgebildet ist.

Alternativ zur Verwendung trockener Faserhalbzeuge können demnach auch bereits mit Harz infusionierte Fasern verwendet werden, wobei das Harz vorzugsweise bereits ausgehärtet ist, sodass das Verbindungselement ein ausgehärtetes Faserverbundbauteil darstellt. Es ist natürlich auch denkbar, dass das Verbindungselement teilweise ausgehärtetes Faserverbundmaterial und teilweise trockenen Fasermaterial aufweist.

Es ist besonders bevorzugt, dass das Verfahren umfasst: Aushärten des infusionierten Harzes, insbesondere des zwischen dem Verbindungselement und der ersten Trennstelle angeordneten Harzes und des zwischen dem Verbindungselement und der zweiten Trennstelle angeordneten Harzes, und vorzugsweise des die Faserhalbzeuge des Verbindungselements imprägnierenden Harzes.

Vorzugsweise wird das Harz unter Verwendung einer Wärmequelle bei einer definierten Temperatur ausgehärtet. Die Verwendung einer Wärmequelle dient dazu, eine möglichst definierte Temperatur für die Aushärtung bereitzustellen. Vorzugsweise findet die Aushärtung somit bei einer definierten Temperatur für eine definierte Zeitdauer statt. Durch eine solche definierte Aushärtung kann auf besonders vorteilhafte Weise sichergestellt werden, dass die gewünschten mechanischen Eigenschaften des Matrixmaterials erreicht werden.

Es ist besonders bevorzugt, dass die erste Trennstelle des ersten Rotorblattsegments einen ersten Gurtabschnitt aufweist, der geschäftet ausgebildet ist, wobei die zweite Trennstelle des zweiten Rotorblattsegments einen zweiten Gurtabschnitt aufweist, der geschäftet ausgebildet ist.

Der erste Gurtabschnitt ist vorzugsweise als ein Faserverbundbauteil ausgebildet, das bereits ausgehärtet ist. Der erste Gurtabschnitt kann Pultrudate umfassen und/oder im Infusionsverfahren hergestellt sein. Der erste Gurtabschnitt weist vorzugsweise Fasern und Kunststoff auf. Vorzugsweise sind die Fasern des ersten Gurtabschnitts unidirektional, oder zumindest zu 90% in unidirektionaler Richtung, ausgerichtet, sodass diese Fasern in Richtung der Längserstreckung des ersten Gurtabschnitts, die bevorzugt im Wesentlichen der Rotorblattlängserstreckung entspricht, ausgerichtet sind. Dadurch kann eine besonders vorteilhafte hohe Biegesteifigkeit und eine hohe Festigkeit in Rotorblattlängsrichtung erreicht werden.

Der zweite Gurtabschnitt ist vorzugsweise als ein Faserverbundbauteil ausgebildet, das bereits ausgehärtet ist. Der zweite Gurtabschnitt kann Pultrudate umfassen und/oder im Infusionsverfahren hergestellt sein. Der zweite Gurtabschnitt weist vorzugsweise Fasern und Kunststoff auf. Vorzugsweise sind die Fasern des zweiten Gurtabschnitts unidirektional, oder zumindest zu 90% in unidirektionaler Richtung, ausgerichtet, sodass diese Fasern in Richtung der Längserstreckung des zweiten Gurtabschnitts, die bevorzugt im Wesentlichen der Rotorblattlängserstreckung entspricht, ausgerichtet sind. Dadurch kann eine besonders vorteilhafte hohe Biegesteifigkeit und eine hohe Festigkeit in Rotorblattlängsrichtung erreicht werden.

Vorzugsweise weist das Verbindungselement ein, vorzugsweise beidseitig geschäftet ausgebildetes, Gurtzwischenelement auf, wobei das Gurtzwischenelement beim Anordnen des Verbindungselements zwischen dem ersten Gurtabschnitt und dem zweiten Gurtabschnitt angeordnet wird, sodass vorzugsweise der erste Gurtabschnitt, das Gurtzwischenelement und das zweite Gurtabschnitt einen Gurt des Rotorblatts ausbilden.

Vorzugsweise ist das Gurtzwischenelement derart geschäftet ausgebildet, dass das Gurtzwischenelement genau an dem geschäftet ausgebildeten ersten Gurtasbschnitt und an dem geschäftet ausgebildeten zweiten Gurtabschnitt anliegt. Das Gurtzwischenelement ist vorzugsweise als ein Faserverbundbauteil ausgebildet, das bereits ausgehärtet ist. Das Gurtzwischenelement kann Pultrudate umfassen und/oder im Infusionsverfahren hergestellt sein. Das Gurtzwischenelement weist vorzugsweise Fasern und Kunststoff auf. Vorzugsweise sind die Fasern des Gurtzwischenelements unidirektional, oder zumindest zu 90% in unidirektionaler Richtung, ausgerichtet, sodass diese Fasern in Richtung der Längserstreckung des Gurtzwischenelements, die bevorzugt im Wesentlichen der Rotorblattlängserstreckung entspricht, ausgerichtet sind. Dadurch kann eine besonders vorteilhafte hohe Biegesteifigkeit und eine hohe Festigkeit in Rotorblattlängsrichtung erreicht werden.

Durch die Verwendung eines solchen Gurtzwischenelements kann auf besonders vorteilhafte Weise ein durchgehender Gurt des Rotorblatts ausgebildet werden. Der Gurt erstreckt sich dann entlang des ersten Gurtabschnitts, dann entlang des Gurtzwischenelements und anschließend weiter entlang des zweiten Gurtabschnitts.

Vorzugsweise weist das Gurtzwischenelement eine Länge von mindestens 2 m, vorzugsweise mindestens 3 m, besonders bevorzugt mindestens 4 m, insbesondere mindestens 5 m, auf. Vorzugsweise weist das Gurtzwischenelement eine Länge von höchstens 25 m, vorzugsweise höchstens 20 m, besonders bevorzugt höchstens 15 m, insbesondere höchstens 10 m, auf.

Vorzugsweise weist das Gurtzwischenelement einen ersten geschäftet ausgebildeten Gurtzwischenelementabschnitt auf, der ein Schäftverhältnis von höchstens 1:30, vorzugsweise höchstens 1:40, besonders bevorzugt höchstens 1:50, insbesondere höchstens 1:60, aufweist, und/oder von mindestens 1:300, vorzugsweise mindestens 1:250, besonders bevorzugt mindestens 1:225, insbesondere mindestens 1:200, aufweist.

Ein Schäftverhältnis von höchstens 1:30 hat sich als besonders vorteilhaft für eine besonders feste und sichere Verbindung mit einer hohen Lebensdauer herausgestellt, da durch ein solches Schäftverhältnis eine relativ große Verbindungsfläche erreicht wird, sodass die Kräfte zwischen den verbundenen Elementen großflächig übertragen werden können und keine zu hohen Lastspitzen auftreten. Besonders bevorzugt hat sich ein Schäftverhältnis von höchstens 1:50 herausgestellt, weil dann eine noch größere Lastübertragungsfläche bereitgestellt werden kann.

Vorzugsweise weist das Gurtzwischenelement einen zweiten geschäftet ausgebildeten Gurtzwischenelementabschnitt auf, der ein Schäftverhältnis von höchstens 1:30, vorzugsweise höchstens 1:40, besonders bevorzugt höchstens 1:50, insbesondere höchstens 1:60, aufweist, und/oder von mindestens 1:300, vorzugsweise mindestens 1:250, besonders bevorzugt mindestens 1:225, insbesondere mindestens 1:200, aufweist.

Die geschäfteten Abschnitte der Rotorblattsegmente weisen vorzugsweise jeweils schräg ausgebildete Verbindungsflächen auf, die den geschäftet ausgebildeten Gurtzwischenelementabschnitten entsprechen, sodass die zu verbindenden Abschnitte aneinander angepasste Winkel aufweisen und diese Abschnitte aneinander anliegen.

Es ist besonders bevorzugt, dass das Gurtzwischenelement übereinandergeschichtete trockene Faserhalbzeuge, insbesondere trockene Fasergelege, umfasst, die vor dem Durchführen des Infusionsverfahrens noch nicht mit Harz imprägniert sind, wobei beim Durchführen des Infusionsverfahrens die Fasern des Gurtzwischenelements des Verbindungselements mit Harz imprägniert werden.

Vorzugsweise bilden die Faserhalbzeuge nach dem Infusionieren zusammen mit dem Kunststoff die entsprechenden Abschnitte des Rotorblatts aus, also insbesondere der Rotorblattschale oder des Rotorblattgurtes.

Die Fasern des Faserhalbzeugs, insbesondere des Fasergeleges, des Gurtzwischenelements sind vorzugsweise unidirektional oder quasi-unidirektional angeordnet. Vorzugsweise sind mindestens 90% der Fasern des Faserhalbzeugs, insbesondere des Fasergeleges, des Gurtzwischenelements unidirektional ausgerichtet. Es kann ein kleinerer Faseranteil, beispielsweise bis zu 10% der Fasern vorgesehen sein, der nicht unidirektional ausgerichtet ist.

Vorzugsweise wird beim Durchführen des Infusionsverfahrens, vorzugsweise Vakuuminfusionsverfahrens, das flüssige Harz mittels Unterdruck auch in das Verbindungselement gezogen, sodass die trockenen Faserhalbzeuge des Verbindungselements zusammen mit dem Harz nach dem Aushärten des Harzes einen Faser-Kunststoff-Verbund ausbilden.

Unter einem Infusionieren ist insbesondere ein Tränken des trockenen Fasermaterials mit dem Harzsystem mithilfe eines Unterdrucks oder Überdrucks zu verstehen.

Es ist besonders bevorzugt, dass das Verbindungselement aufweist: einen Rotorblattschalenaußenseitenabschnitt, der vorzugsweise trockene Fasern umfasst, wobei der Rotorblattschalenaußenseitenabschnitt vorzugsweise geschäftet ausgebildet ist, und/oder einen Kernmaterialabschnitt, der vorzugsweise mit dem Rotorblattschalenaußenseitenabschnitt verbunden ist, wobei der Kernmaterialabschnitt vorzugsweise geschäftet ausgebildet ist, und/oder einen Rotorblattinnenseitenabschnitt, der vorzugsweise trockene Fasern umfasst, wobei der Rotorblattinnenseitenabschnitt vorzugsweise geschäftet ausgebildet ist, wobei der Rotorblattinnenseitenabschnitt vorzugsweise mit dem Kernmaterialabschnitt verbunden ist.

Der Rotorblattschalenaußenseitenabschnitt bildet vorzugsweise abschnittsweise die Rotorblattschalenaußenseite des Rotorblatts aus. Vorzugsweise ist der Kernmaterialabschnitt zwischen dem Rotorblattinnenseitenabschnitt des Verbindungselements und dem Rotorblattschalenaußenseitenabschnitt des Verbindungselements angeordnet. Es ist aber auch denkbar, dass nur ein Rotorblattschalenaußenseitenabschnitt und ein Kernmaterialabschnitt vorhanden sind.

Der Kernmaterialabschnitt bildet vorzugsweise abschnittsweise das Kernmaterial des Rotorblatts aus.

Das Verbindungselement weist vorzugsweise einen sich in Längsrichtung des Rotorblatts erstreckenden Verstärkungsstreifen auf.

Es ist besonders bevorzugt, dass sich das Verbindungselement in Querrichtung entlang einer ersten Rotorblattschale des Rotorblatts erstreckt.

Vorzugsweise erstreckt sich das Verbindungselement in Längsrichtung des Rotorblatts entlang der gesamten ersten Rotorblattschale des Rotorblatts.

Vorzugsweise ist ein weiteres Verbindungselement vorgesehen, dass sich in Querrichtung entlang einer zweiten Rotorblattschale des Rotorblatts erstreckt.

Vorzugsweise erstreckt sich das weitere Verbindungselement in Längsrichtung des Rotorblatts entlang der gesamten zweiten Rotorblattschale des Rotorblatts.

Es ist besonders bevorzugt, dass das erste Rotorblattsegment und das zweite Rotorblattsegment getrennt voneinander zu einem Aufstellort transportiert werden.

Ein Vorteil eines solchen separaten Transportes besteht darin, dass das erste Rotorblattsegment und das zweite Rotorblattsegment mit unterschiedlichen Fahrzeugen transportiert werden können, wodurch die Gesamtlänge des jeweiligen Transports deutlich geringer ist, also dies bei einem nicht getrennten Rotorblatt von vergleichbarer Größe der Fall wäre. Dadurch wird eine deutlich verbesserte Transportfähigkeit erreicht. Insbesondere wird dadurch ermöglicht, dass solche Rotorblätter auch an schwer zugängliche Orte transportiert werden können, sodass auch schwer zugängliche Orte als Aufstellorte für moderne Windenergieanlagen mit relativ großen Rotorblättern erschlossen werden können.

Vorzugsweise werden das erste Rotorblattsegment und das zweite Rotorblattsegment und das Verbindungselement, und vorzugsweise ein weiteres Verbindungselement, mittels Durchführen des Infusionsverfahrens an dem Aufstellort miteinander verbunden.

Ein Vorteil des Durchführens des Infusionsverfahrens an dem Aufstellort besteht darin, dass die Bauteile bis zum Aufstellort getrennt voneinander transportiert werden können und dann erst am Aufstellort miteinander verbunden werden.

Es ist besonders bevorzugt, dass während des Durchführens des Infusionsverfahrens der erste geschäftete Verbindungsabschnitt, der zweite geschäftete Verbindungsabschnitt, der erste geschäftete Abschnitt und der zweite geschäftete Abschnitt luftdicht, insbesondere mittels einer Vakuumfolie, gegen die Umgebung abgedichtet sind.

Zum Abdichten wird bevorzugt eine Vakuumfolie verwendet, die, vorzugsweise mit einem luftundurchlässigen Klebeband, an den zu verbindenden Bauteilen befestigt wird. Auf diese Weise kann ein ausreichender Unterdruck bereitgestellt werden, um das Infusionsverfahren durchzuführen, ohne dass dabei unerwünschte Poren erzeugt werden.

Gemäß einem weiteren Aspekt wird die eingangs genannte Aufgabe gelöst durch ein Verbindungselement zum Verbinden eines ersten Rotorblattsegments und eines zweiten Rotorblattsegments eines Rotorblatts für eine Windenergieanlage, das Verbindungselement umfassend einen ersten geschäfteten Verbindungsabschnitt zur Verbindung mit einem ersten geschäfteten Abschnitt einer ersten Trennstelle eines ersten Rotorblattsegments und einen zweiten geschäfteten Verbindungsabschnitt zur Verbindung mit einem zweiten geschäfteten Abschnitt einer zweiten Trennstelle eines zweiten Rotorblattsegments, wobei das Verbindungselement derart ausgebildet und anordenbar ist, dass der erste geschäftete Verbindungsabschnitt an dem ersten geschäfteten Abschnitt der ersten Trennstelle des ersten Rotorblattsegments anliegt und der zweite geschäftete Verbindungsabschnitt an dem zweiten geschäfteten Abschnitt der zweiten Trennstelle des zweiten Rotorblattsegments anliegt.

Vorzugsweise ist der zweite geschäftete Verbindungsabschnitt ausgebildet, um eine Verbindung mit dem zweiten geschäfteten Abschnitt des zweiten Rotorblattsegments herzustellen.

Vorzugsweise ist der zweite geschäftete Verbindungsabschnitt derart geformt, dass er genau an dem zweiten geschäfteten Abschnitt des zweiten Rotorblattsegments anliegt.

Es ist besonders bevorzugt, dass das Verbindungselement vor einem Verbinden mit dem ersten Rotorblattsegment und dem zweiten Rotorblattsegment trockene Faserhalbzeuge, insbesondere trockene Fasergelege, umfasst.

Die trockenen Faserhalbzeuge sind dabei vorzugsweise übereinandergeschichtete Fasergelege. Die Faserhalbzeuge sind vorzugsweise gestuft angeordnet, um einen geschäfteten Abschnitt auszubilden.

Es ist besonders bevorzugt, dass das Verbindungselement Kernmaterial umfasst, wobei vorzugsweise das Kernmaterial zumindest abschnittsweise geschäftet ausgebildet ist.

Es ist besonders bevorzugt, dass das Verbindungselement ein, vorzugsweise beidseitig geschäftet ausgebildetes, Gurtzwischenelement aufweist, das vorzugsweise ausgebildet ist, um bei einem Anordnen des Verbindungselements zwischen einem ersten Gurtabschnitt des ersten Rotorblattsegments und einem zweiten Gurtabschnitt des zweiten Rotorblattsegments einen Gurt auszubilden.

Vorzugsweise ist das Verbindungselement derart geschäftet, dass das Verbindungselement genau an dem geschäftet ausgebildeten ersten Gurtasbschnitt und an dem geschäftet ausgebildeten zweiten Gurtabschnitt anliegt.

Vorzugsweise weist das Gurtzwischenelement eine Länge von mindestens 2 m, vorzugsweise mindestens 3 m, besonders bevorzugt mindestens 4 m, insbesondere mindestens 5 m, auf.

Vorzugsweise weist das Gurtzwischenelement einen ersten geschäftet ausgebildeten Gurtzwischenelementabschnitt auf, der ein Schäftverhältnis von höchstens 1:30, vorzugsweise höchstens 1:40, besonders bevorzugt höchstens 1:50, insbesondere höchstens 1:60, aufweist, und/oder von mindestens 1:300, vorzugsweise mindestens 1:250, besonders bevorzugt mindestens 1:225, insbesondere mindestens 1:200, aufweist.

Vorzugsweise weist das Gurtzwischenelement einen zweiten geschäftet ausgebildeten Gurtzwischenelementabschnitt auf, der ein Schäftverhältnis von höchstens 1:30, vorzugsweise höchstens 1:40, besonders bevorzugt höchstens 1:50, insbesondere höchstens 1:60, aufweist, und/oder von mindestens 1:300, vorzugsweise mindestens 1:250, besonders bevorzugt mindestens 1:225, insbesondere mindestens 1:200, aufweist.

Vorzugsweise umfasst das Gurtzwischenelement übereinandergeschichtete trockene Faserhalbzeuge, insbesondere trockene Fasergelege.

Vorzugsweise weist das Verbindungselement auf: einen Rotorblattschalenaußenseitenabschnitt, der vorzugsweise trockene Fasern umfasst, wobei der Rotorblattschalenaußenseitenabschnitt vorzugsweise geschäftet ausgebildet ist, und/oder einen Kernmaterialabschnitt, der vorzugsweise mit dem Rotorblattschalenaußenseitenabschnitt verbunden ist, wobei der Kernmaterialabschnitt vorzugsweise geschäftet ausgebildet ist, und/oder einen Rotorblattinnenseitenabschnitt, der vorzugsweise trockene Fasern umfasst, wobei der Rotorblattinnenseitenabschnitt vorzugsweise geschäftet ausgebildet ist, wobei der Rotorblattinnenseitenabschnitt vorzugsweise mit dem Kernmaterialabschnitt verbunden ist.

Gemäß einem weiteren Aspekt wird die eingangs genannte Aufgabe gelöst durch ein Rotorblatt für eine Windenergieanlage, das Rotorblatt umfassend ein wie hier beschriebenes Verbindungelement, vorzugsweise zwei wie hier beschriebene Verbindungselemente, ein erstes Rotorblattsegment, das vorzugsweise eine erste Trennstelle aufweist, die einen ersten geschäfteten Abschnitt aufweist, ein zweites Rotorblattsegment, das vorzugsweise eine zweite Trennstelle aufweist, die einen zweiten geschäfteten Abschnitt aufweist, wobei das Verbindungselement mit dem ersten Rotorblattsegment und mit dem zweiten Rotorblattsegment verbunden ist, wobei vorzugsweise die Verbindung erhalten ist durch Durchführen eines Infusionsverfahrens, vorzugsweise Vakuuminfusionsverfahrens.

Das Rotorblatt umfasst vorzugsweise: einen ersten Gurt, der sich entlang einer ersten Rotorblattschale, vorzugsweise in Form einer Saugseitenrotorblattschale, des Rotorblatts erstreckt, einen zweiten Gurt, der sich entlang einer zweiten Rotorblattschale, vorzugsweise in Form einer Druckseitenrotorblattschale, des Rotorblatts erstreckt, und vorzugsweise mindestens einen Steg, umfassend einen ersten Verbindungsabschnitt und einen zweiten Verbindungsabschnitt, wobei der erste Verbindungsabschnitt des Stegs mit der Gurtinnenseite des ersten Gurts verbunden ist und der zweite Verbindungsabschnitt des Stegs mit der Gurtinnenseite des zweiten Gurts verbunden ist.

Gemäß einem weiteren Aspekt wird die eingangs genannte Aufgabe gelöst durch eine Windenergieanlage, umfassend mindestens ein wie hier beschriebenes Rotorblatt, vorzugsweise drei wie hier beschriebene Rotorblätter.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: eine schematische Darstellung einer Windenergieanlage;
- Fig. 2A, 2B:: einen schematischen Querschnitt und einen schematischen Längsschnitt eines Rotorblattes;
- Fig. 3:: eine schematische Schnittansicht von zwei Verbindungselementen zur Verbindung von zwei Rotorblattsegmenten;
- Fig. 4:: eine Draufsicht auf zwei nebeneinander angeordnete Rotorblattsegmente;
- Fig. 5:: eine Draufsicht auf zwei nebeneinander angeordnete Rotorblattsegmente, die mittels Verbindungselement miteinander verbunden sind;
- Fig. 6:: eine Querschnittsansicht einer Verbindung eines Gurtzwischenelements mit einem ersten Gurtabschnitt des ersten Rotorblattsegments und mit dem zweiten Gurtabschnitt des zweiten Rotorblattsegments;
- Fig. 7:: eine Querschnittsansicht einer Verbindung eines Verstärkungsabschnitts mit einem ersten Rotorblattschalenabschnitt und mit einem zweiten Rotorblattschalenabschnitt;
- Fig. 8:: eine Querschnittsansicht einer Verbindung eines Rotorblattschalenzwischenelements mit einem ersten Rotorblattschalenabschnitt und mit einem zweiten Rotorblattschalenabschnitt;
- Fig. 9:: eine perspektivische Querschnittsansicht eines Ausschnitts eines Verbindungselements;
- Fig. 10:: eine schematische Darstellung eines Verfahrens zum Herstellen eines Rotorblatts für eine Windenergieanlage.

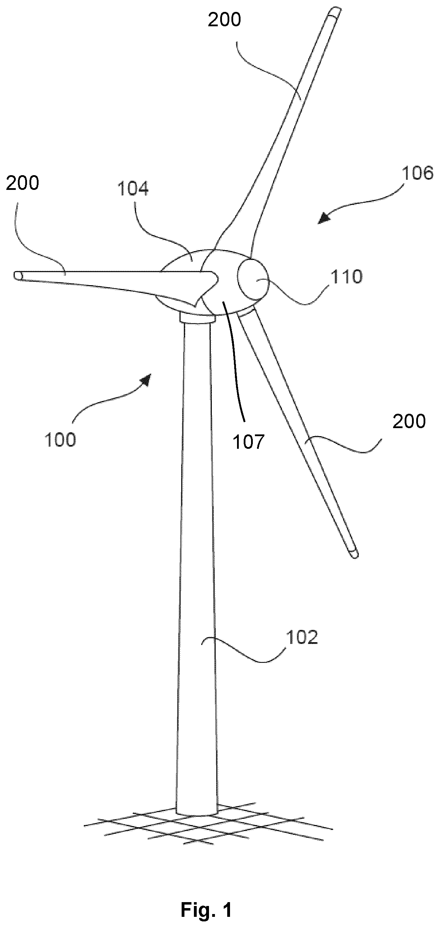

Fig. 1 zeigt eine schematische Darstellung einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 200, einer Nabe 107 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

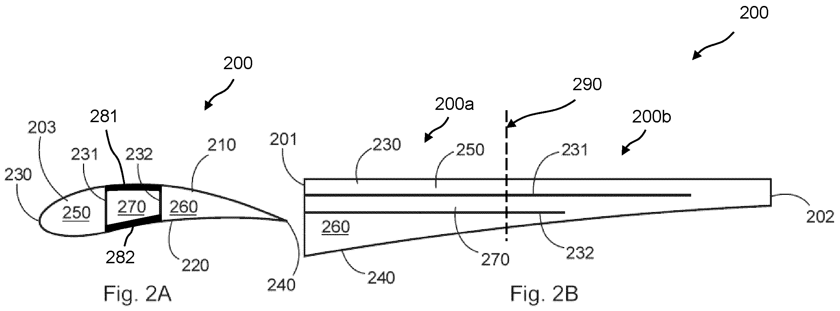

Fig. 2A zeigt einen Querschnitt eines Rotorblattes und Fig. 2B zeigt einen Längsschnitt eines Rotorblattes. Das Rotorblatt 200 weist zwei Rotorblattschalen 210, 220 auf, die auch als Rotorblatthalbschalen bezeichnet werden können, welche ein Innenvolumen 203 umgeben. Das Rotorblatt 200 weist ferner eine Rotorblattvorderkante 230 und eine Rotorblatthinterkante 240 auf. Zwischen den Rotorblattschalen 210, 220 sind Stege 231, 232 vorgesehen, so dass das Innenvolumen 203 in verschiedene Abschnitte oder Kanäle 250, 260 und 270 (erster Kanal 250 zwischen Rotorblattvorderkante 230 und erstem Steg 231, zweiter Kanal 260 zwischen Hinterkante 240 und zweitem Steg 232 und dritter Kanal 270 zwischen erstem und zweitem Steg 231, 232) aufgeteilt werden kann. Der Steg 231 kann beispielsweise länger sein als der Steg 232.

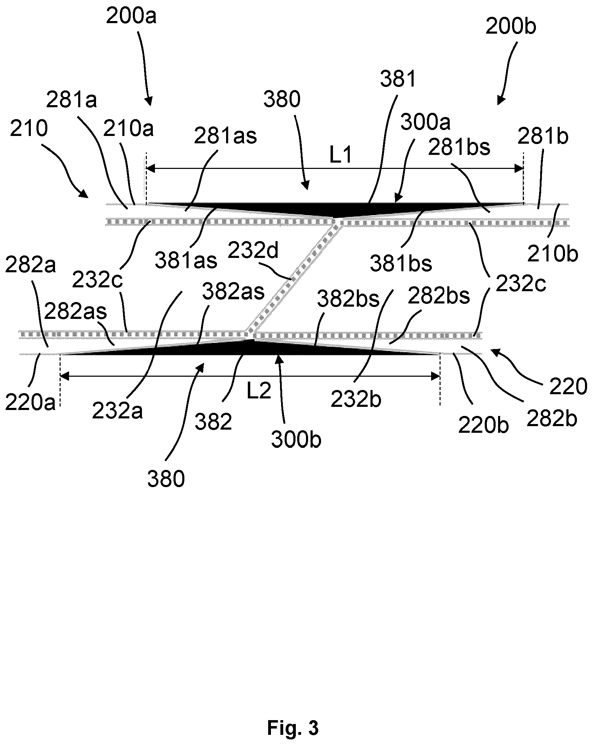

Fig. 3 zeigt eine schematische Schnittansicht von zwei Verbindungselementen zur Verbindung von zwei Rotorblattsegmenten. Die Zeichnung ist nicht maßstabsgetreu. Insbesondere sind die Winkel der geschäfteten Bauteile zur besseren Darstellbarkeit deutlich steiler dargestellt, als tatsächlich vorgesehen. Es sind ein erstes Rotorblattsegment 200a und ein zweites Rotorblattsegment 200b nebeneinander angeordnet.

Oben ist die erste Rotorblattschale 210 und unten die gegenüberliegende zweite Rotorblattschale 220 gezeigt. Der Aufbau der Verbindung ist bei beiden Rotorblattschalen 210, 220 gleich.

Zunächst zur oberen Rotorblattschale 210. Zwischen den beiden Rotorblattsegmenten 200a, 200b ist ein Gurtzwischenelement 380, 381 angeordnet. Das Gurtzwischenelement 380, 381 weist eine Längserstreckung L1 auf.

Die Rotorblattschale 210 weist auf der Seite des ersten Rotorblattsegments 200a eine Außenhaut 210a auf. Es ist ein erster Gurtabschnitt 281a des ersten Rotorblattsegments 200a auf der Seite der ersten Rotorblattschale 210 vorgesehen, der einen geschäfteten Abschnitt 281as aufweist. An diesem geschäfteten Abschnitt 281as liegt ein erster geschäfteter Verbindungsabschnitt 381as des Gurtzwischenelements 380, 381 des Verbindungselements 300a an.

Die Rotorblattschale 210 weist auf der Seite des zweiten Rotorblattsegments 200b eine Außenhaut 210b auf. Es ist ein erster Gurtabschnitt 281b des zweiten Rotorblattsegments 200b auf der Seite der ersten Rotorblattschale 210 vorgesehen, der einen geschäfteten Abschnitt 281bs aufweist. An diesem geschäfteten Abschnitt 281bs liegt ein zweiter geschäfteter Verbindungsabschnitt 381bs des Gurtzwischenelements 380, 381 des Verbindungselements 300a an.

Nun zur unteren Rotorblattschale 220. Zwischen den beiden Rotorblattsegmenten ist ein Gurtzwischenelement 380, 382 angeordnet. Das Gurtzwischenelement 380, 382 weist eine Längserstreckung L2 auf.

Die Rotorblattschale 220 weist auf der Seite des ersten Rotorblattsegments 200a eine Außenhaut 220a auf. Es ist ein zweiter Gurtabschnitt 282a des ersten Rotorblattsegments 200a auf der Seite der zweiten Rotorblattschale 220 vorgesehen, der einen geschäfteten Abschnitt 282as aufweist. An diesem geschäfteten Abschnitt 282as liegt ein erster geschäfteter Verbindungsabschnitt 382as des Gurtzwischenelements 380, 382 des Verbindungselements 300b an.

Die Rotorblattschale 220 weist auf der Seite des zweiten Rotorblattsegments 200b eine Außenhaut 220b auf. Es ist ein zweiter Gurtabschnitt 282b des zweiten Rotorblattsegments 200b auf der Seite der zweiten Rotorblattschale 220 vorgesehen, der einen geschäfteten Abschnitt 282bs aufweist. An diesem geschäfteten Abschnitt 282bs liegt ein zweiter geschäfteter Verbindungsabschnitt 382bs des Gurtzwischenelements 380, 382 des Verbindungselements 300b an.

Auf der Seite des ersten Rotorblattsegments 200a ist ein erster Stegabschnitt 232a angeordnet. Auf der Seite des zweiten Rotorblattsegments 200b ist ein zweiter Stegabschnitt 232b angeordnet. Die Stegabschnitte 232a und 232b sind jeweils mit den Gurtabschnitten 281a, 281as, 381, 281as, 281b (oben) sowie 282a, 282as, 382, 282as, 282b (unten) mittels den Stegverklebungen 232c verklebt. Die Stegabschnitte 232a, 232b selbst sind ebenfalls mittels einer Stegverklebung 232d miteinander verklebt.

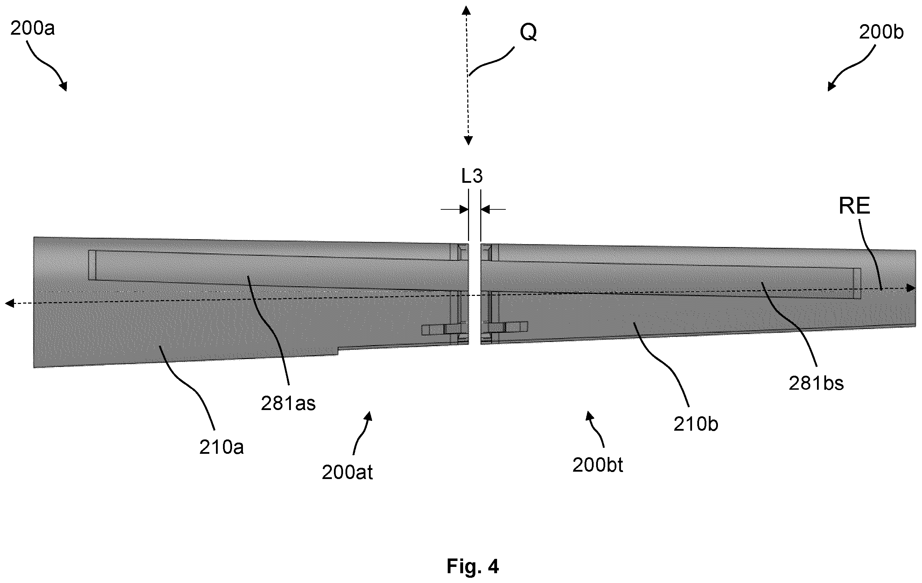

Fig. 4 zeigt eine Draufsicht auf zwei nebeneinander angeordnete Rotorblattsegmente 200a, 200b. Die Rotorblattsegmente 200a, 200b sind nebeneinander und beabstandet zueinander angeordnet. Zwischen den Rotorblattsegmenten liegt der Abstand L3 in Rotorblattlängserstreckungsrichtung RE vor. Quer zur Rotorblattlängserstreckungsrichtung RE erstreckt sich die Rotorblattquererstreckungsrichtung Q. In Fig. 4 ist noch kein Verbindungselement zur Verbindung der beiden Rotorblattsegmente 200a, 200b vorhanden.

Das erste Rotorblattsegment 200a weist eine Außenhaut 210a und eine erste Trennstelle 200at auf, die einen ersten geschäfteten Gurtabschnitt 281as aufweist. Das zweite Rotorblattsegment 200b weist zweite Außenhaut 210b und eine zweite Trennstelle 200bt auf, die einen zweiten geschäfteten Gurtabschnitt 281bs aufweist.

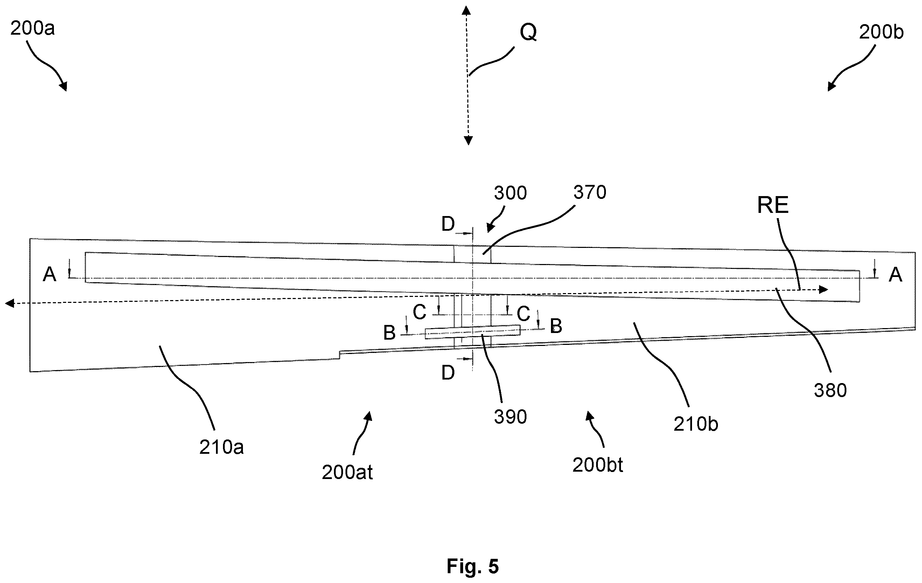

Fig. 5 zeigt eine Draufsicht auf zwei nebeneinander angeordnete Rotorblattsegmente 200a, 200b, die wie im Zusammenhang mit Fig. 4 beschrieben aufgebaut sind. In Fig. 5 ist nun ein Verbindungselement 300 vorhanden, dass die zwei Rotorblattsegmente 200a, 200b miteinander verbindet.

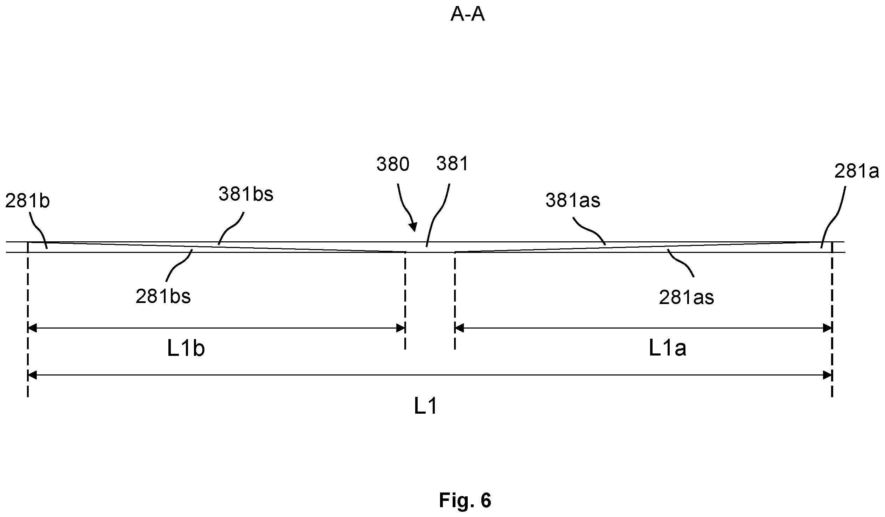

In Fig. 5 ist angegeben, welche Ansichten die in Fig. 6-9 gezeigten Schnittansichten A-A, B-B, C-C, D-D jeweils zeigen.

Fig. 6 zeigt den in Fig. 5 eingezeichneten Schnitt A-A. Dies ist eine Querschnittsansicht einer Verbindung eines Gurtzwischenelements 380, 381 mit einem ersten Gurtabschnitt 281a des ersten Rotorblattsegments 200a und mit dem zweiten Gurtabschnitt 281b des zweiten Rotorblattsegments 200b.

Das Gurtzwischenelement 380, 381 weist einen ersten geschäfteten Verbindungsabschnitt 381as und einen zweiten geschäfteten Verbindungsabschnitt 381bs auf. Am ersten geschäfteten Verbindungsabschnitt 381as liegt der erste geschäftete Gurtabschnitt 281as des ersten Gurtabschnitts 281a des ersten Rotorblattsegments 200a (siehe Fig. 5) an. Am zweiten geschäfteten Verbindungsabschnitt 381bs liegt der zweite geschäftete Gurtabschnitt 281bs des zweiten Gurtabschnitts 281b des zweiten Rotorblattsegments 200b (siehe Fig. 5) an. Das Gurtzwischenelement 380, 381 weist eine Längserstreckung L1 Rotorblattlängserstreckungsrichtung RE auf. L1a und L1b geben jeweils die Längserstreckungen der Schäftungen des Gurtzwischenelements 380, 381 an.

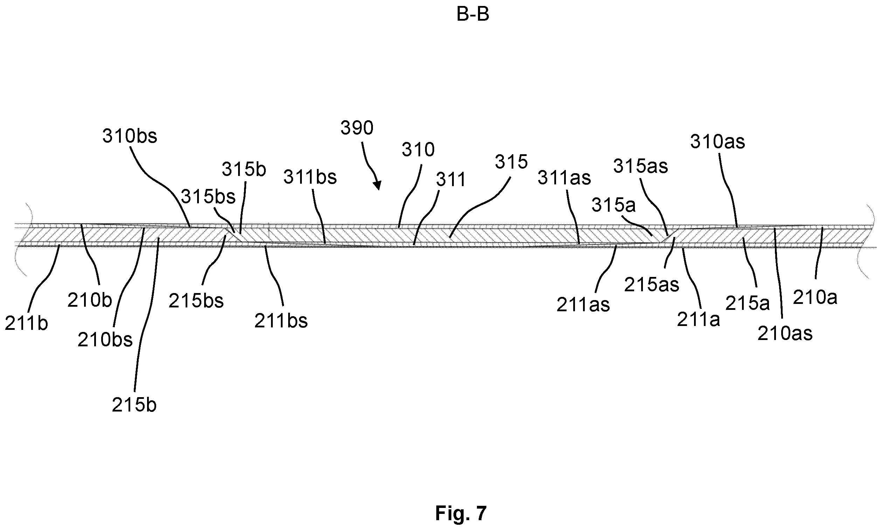

Fig. 7 zeigt den in Fig. 5 eingezeichneten Schnitt B-B. Dies ist eine Querschnittsansicht einer Verbindung eines Verstärkungsabschnitts 390 des Verbindungselements mit einem ersten Rotorblattschalenabschnitt und mit einem zweiten Rotorblattschalenabschnitt. Der Verstärkungsabschnitt 390 weist einen Rotorblattinnenseitenabschnitt 311 und einen Rotorblattschalenaußenseitenabschnitt 310 auf. Dazwischen ist ein Kernmaterialabschnitt 315 aus Kernmaterial angeordnet.

Es ist ein erster geschäfteter Verbindungsabschnitt 315as des ersten Kernmaterialabschnitts 315a, 315 vorgesehen, der an einem ersten geschäfteten Verbindungsabschnitt 215as des Kernmaterialabschnitts 215a des ersten Rotorblattsegments anliegt.

Es ist ein zweiter geschäfteter Verbindungsabschnitt 315bs des zweiten Kernmaterialabschnitts 315b, 315 vorgesehen, der an einem zweiten geschäfteten Verbindungsabschnitt 215bs des Kernmaterialabschnitts 215b des zweiten Rotorblattsegments anliegt.

Auch der Rotorblattinnenseitenabschnitt 311 und der Rotorblattschalenaußenseitenabschnitt 310 sind geschäftet ausgebildet.

Der Rotorblattinnenseitenabschnitt 311 weist einen ersten geschäfteten Abschnitt 311as auf, der an einem ersten geschäfteten Verbindungsabschnitt 211as des Rotorblattinnenseitenabschnitts 211 des ersten Rotorblattsegments anliegt. Der Rotorblattinnenseitenabschnitt 311 weist außerdem einen zweiten geschäfteten Abschnitt 311bs auf, der an einem zweiten geschäfteten Verbindungsabschnitt 211bs des Rotorblattinnenseitenabschnitts des zweiten Rotorblattsegments anliegt.

Der Rotorblattschalenaußenseitenabschnitt 310 weist einen ersten geschäfteten Abschnitt 310as auf, der an einem ersten geschäfteten Verbindungsabschnitt 210as des Rotorblattschalenaußenseitenabschnitts 210 des ersten Rotorblattsegments anliegt. Der Rotorblattschalenaußenseitenabschnitt 310 weist außerdem einen zweiten geschäfteten Abschnitt 310bs auf, der an einem zweiten geschäfteten Verbindungsabschnitt 210bs des Rotorblattschalenaußenseitenabschnitts des zweiten Rotorblattsegments anliegt.

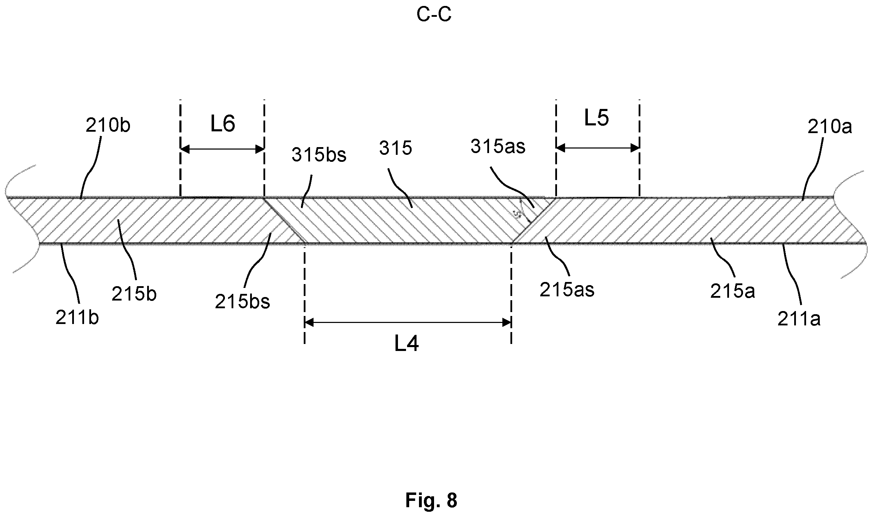

Fig. 8 zeigt in Fig. 5 eingezeichneten den Schnitt C-C. Dies ist eine Querschnittsansicht einer Verbindung eines Rotorblattschalenzwischenelements mit einem Kernmaterialabschnitt 315 mit einem ersten Rotorblattschalenabschnitt und mit einem zweiten Rotorblattschalenabschnitt. Der Kernmaterialabschnitt 315 weist einen ersten geschäfteten Verbindungsabschnitt 315as und einen zweiten geschäfteten Verbindungsabschnitt 315bs auf. Diese Verbindungsabschnitte 315as, 315bs sind verbunden mit einem ersten Verbindungsabschnitt 215as des Kernmaterials 215a des ersten Rotorblattsegments und einem zweiten Verbindungsabschnitt 215bs des Kernmaterials 215b des zweiten Rotorblattsegments. Ferner sind auch der erste Rotorblattschalenaußenseitenabschnitt 210a und der zweite Rotorblattschalenaußenseitenabschnitt 210b geschäftet ausgebildet, und zwar entlang der Längserstreckungen L5 und L6. Die Innenseite des Kernmaterialabschnitts 315, der zwischen den Kernmaterialien 215a und 215b angeordnet ist, weist eine Längserstreckung L4 auf.

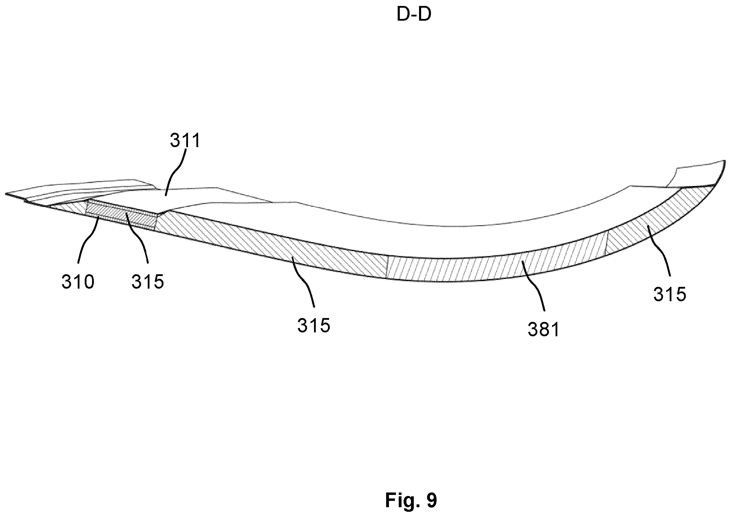

Fig. 9 zeigt den in Fig. 5 eingezeichneten Schnitt D-D. Dies ist eine perspektivische Querschnittsansicht des Ausschnitts des Verbindungselements. Der Ausschnitt weist unterschiedliche Materialien und Abschnitte auf, nämlich Kernmaterialabschnitte 315, einen Rotorblattinnenseitenabschnitt 311 einen Rotorblattschalenaußenseitenabschnitt 310 und ein Gurtzwischenelement 381.

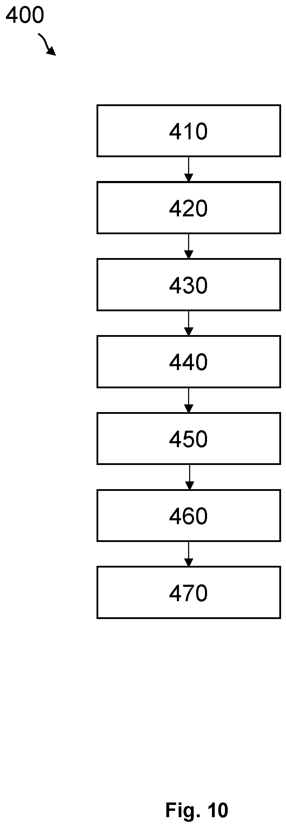

Fig. 10 zeigt eine schematische Darstellung eines Verfahrens 400 zum Herstellen eines Rotorblatts 200 für eine Windenergieanlage 100. Das Verfahren 400 umfasst folgende Schritte:
In einem Schritt 410, Bereitstellen eines ersten Rotorblattsegments 200a, das eine erste Trennstelle 200at aufweist, die einen ersten geschäfteten Abschnitt 210as, 211as, 215as, 281as aufweist.

In einem Schritt 420, Bereitstellen eines zweiten Rotorblattsegments 200b, das eine zweite Trennstelle 200bt aufweist, die einen zweiten geschäfteten Abschnitt 210bs, 211bs, 215bs, 281bs aufweist.

In einen Schritt 430, Bereitstellen eines Verbindungselements 300, das einen ersten geschäfteten Verbindungsabschnitt 310as, 311as, 315as, 381as zur Verbindung mit dem ersten geschäfteten Abschnitt und einen zweiten geschäfteten Verbindungsabschnitt 310bs, 311bs, 315bs, 381bs zur Verbindung mit dem zweiten geschäfteten Abschnitt aufweist.

In einem Schritt 440, Anordnen des ersten Rotorblattsegments 200a und des zweiten Rotorblattsegments 200b hintereinander entlang einer Rotorblattlängserstreckungsrichtung RE.

In einem Schritt 450, Anordnen des Verbindungselements 300 derart, dass der erste geschäftete Verbindungsabschnitt an dem ersten geschäfteten Abschnitt der ersten Trennstelle anliegt und der zweite geschäftete Verbindungsabschnitt an dem zweiten geschäfteten Abschnitt der zweiten Trennstelle anliegt.

In einem Schritt 460, Durchführen eines Infusionsverfahrens, vorzugsweise Vakuuminfusionsverfahrens, wobei flüssiges Harz mittels Unterdruck zwischen das Verbindungselement und die erste Trennstelle und zwischen das Verbindungselement und die zweite Trennstelle gezogen wird.

In einem Schritt 470., Aushärten des infusionierten Harzes, insbesondere des zwischen dem Verbindungselement 300 und der ersten Trennstelle 200at angeordneten Harzes und des zwischen dem Verbindungselement 300 und der zweiten Trennstelle 200bt angeordneten Harzes, und vorzugsweise des die Faserhalbzeuge des Verbindungselements imprägnierenden Harzes.

### Bezugszeichenliste

- 100: Windenergieanlage
- 102: Turm
- 104: Gondel
- 106: Rotor
- 107: Nabe
- 110: Spinner
- 200: Rotorblatt
- 200a: erstes Rotorblattsegment
- 200at: erste Trennstelle des ersten Rotorblattsegments
- 200b: zweites Rotorblattsegment
- 200bt: zweite Trennstelle des zweiten Rotorblattsegments
- 203: Innenvolumen
- 210: erste Rotorblattschale bzw. erste Rotorblatthalbschale
- 210a, 210b: Außenhaut der ersten Rotorblattschale
- 211: Rotorblattinnenseitenabschnitt 211
- 211as: erster geschäfteter Verbindungsabschnitt des ersten Rotorblattsegments
- 211bs: zweiter geschäfteter Verbindungsabschnitt des zweiten Rotorblattsegments
- 215, 215a, 215b: Kernmaterialabschnitt
- 215as: erster geschäfteter Verbindungsabschnitt des Kernmaterialabschnitts des ersten Rotorblattsegments
- 215bs: zweiter geschäfteter Verbindungsabschnitt des Kernmaterialabschnitts des zweiten Rotorblattsegments
- 220: zweite Rotorblattschale bzw. zweite Rotorblatthalbschale
- 220a, 220b: Außenhaut der zweiten Rotorblattschale
- 230: Rotorblattvorderkante
- 231, 232: Stege
- 232a: erster Stegabschnitt
- 232b: zweiter Stegabschnitt
- 232c, 232d: Stegverklebungen
- 240: Rotorblatthinterkante
- 250, 260, 270: Kanäle
- 281a: erster Gurtabschnitt des ersten Rotorblattsegments
- 281as: geschäfteter Abschnitt des ersten Gurtabschnitts des ersten Rotorblattsegments
- 281b: erster Gurtabschnitt des zweiten Rotorblattsegments
- 281bs: geschäfteter Abschnitt des ersten Gurtabschnitts des zweiten Rotorblattsegments
- 282a: zweiter Gurtabschnitt des ersten Rotorblattsegments
- 282as: geschäfteter Abschnitt des zweiten Gurtabschnitts des ersten Rotorblattsegments
- 282b: zweiter Gurtabschnitt des zweiten Rotorblattsegments
- 282bs: geschäfteter Abschnitt des zweiten Gurtabschnitts des zweiten Rotorblattsegments
- 300, 300a, 300b: Verbindungselement
- 310: Rotorblattschalenaußenseitenabschnitt
- 311: Rotorblattinnenseitenabschnitt
- 311as: erster geschäfteter Abschnitt des Rotorbalttinnenseitenabschnitts
- 311bs: zweiter geschäfteter Abschnitt des Rotorbalttinnenseitenabschnitts
- 315: Kernmaterialabschnitt
- 315a: erster Kernmaterialabschnitt
- 315as: erster geschäfteter Verbindungsabschnitt des ersten Kernmaterialabschnitts
- 315b: zweiter Kernmaterialabschnitt
- 315bs: zweiter geschäfteter Verbindungsabschnitt des zweiten Kernmaterialabschnitts
- 380, 381, 382: Gurtzwischenelement
- 381a, 382a: erster Gurtabschnitt des Gurtzwischenelements
- 381as: erster geschäfteter Verbindungsabschnitt des Gurtzwischenelements
- 381bs: zweiter geschäfteter Verbindungsabschnitt des Gurtzwischenelements
- 381b, 382b: zweiter Gurtabschnitt des Gurtzwischenelements
- 390: Verstärkungsabschnitt des Verbindungselements
- 410--470: Verfahrensschritte
- L1, L2: Länge des Gurtzwischenelements
- L1a, L1b: Längen der Schäftungen des Gurtzwischenelements
- L3: Abstand zwischen den Rotorblattsegmenten
- L4: Längserstreckung der Innenseite des Kernmaterialabschnitts
- L5: Längserstreckung der Schäftung des ersten Rotorblattschalenaußenseitenabschnitts
- L6: Längserstreckung der Schäftung des zweiten Rotorblattschalenaußenseitenabschnitts
- RE: Rotorblattlängserstreckungsrichtung
- Q: Rotorblattquererstreckungsrichtung

## Patentansprüche

1. Verfahren (400) zum Herstellen eines Rotorblatts (200) für eine Windenergieanlage (100), das Verfahren umfassend:
- Bereitstellen (410) eines ersten Rotorblattsegments (200a), das eine erste Trennstelle (200at) aufweist, die einen ersten geschäfteten Abschnitt (210as, 211as, 215as, 281as) aufweist;
- Bereitstellen (420) eines zweiten Rotorblattsegments (200b), das eine zweite Trennstelle (200bt) aufweist, die einen zweiten geschäfteten Abschnitt (210bs, 211bs, 215bs, 281bs) aufweist;
- Bereitstellen (430) eines Verbindungselements (300), das einen ersten geschäfteten Verbindungsabschnitt (310as, 311as, 315as, 381as) zur Verbindung mit dem ersten geschäfteten Abschnitt und einen zweiten geschäfteten Verbindungsabschnitt (310bs, 311bs, 315bs, 381bs) zur Verbindung mit dem zweiten geschäfteten Abschnitt aufweist;
- Anordnen (440) des ersten Rotorblattsegments (200a) und des zweiten Rotorblattsegments (200b) hintereinander entlang einer Rotorblattlängserstreckungsrichtung (RE);
- Anordnen (450) des Verbindungselements (300) derart, dass der erste geschäftete Verbindungsabschnitt an dem ersten geschäfteten Abschnitt der ersten Trennstelle anliegt und der zweite geschäftete Verbindungsabschnitt an dem zweiten geschäfteten Abschnitt der zweiten Trennstelle anliegt;
- Durchführen (460) eines Infusionsverfahrens, vorzugsweise Vakuuminfusionsverfahrens, wobei flüssiges Harz mittels Unterdruck zwischen das Verbindungselement und die erste Trennstelle und zwischen das Verbindungselement und die zweite Trennstelle gezogen wird.

2. Verfahren nach dem vorhergehenden Anspruch,
wobei das Verbindungselement (300) trockene Faserhalbzeuge, insbesondere trockene Fasergelege, umfasst, die vor dem Durchführen des Infusionsverfahrens noch nicht mit Harz getränkt sind, wobei beim Durchführen (460) des Infusionsverfahrens die Faserhalbzeuge des Verbindungselements mit Harz imprägniert werden.

3. Verfahren nach Anspruch 1,
wobei das Verbindungselement (300) bereits vor dem Durchführen (460) des Infusionsverfahrens als zumindest teilweise, vorzugsweise vollständig, ausgehärtetes Faserverbundbauteil, ausgebildet ist.

4. Verfahren nach einem der vorhergehenden Ansprüche, umfassend:
- Aushärten (470) des infusionierten Harzes, insbesondere des zwischen dem Verbindungselement (300) und der ersten Trennstelle (200at) angeordneten Harzes und des zwischen dem Verbindungselement (300) und der zweiten Trennstelle (200bt) angeordneten Harzes, und vorzugsweise des die Faserhalbzeuge des Verbindungselements imprägnierenden Harzes.

5. Verfahren nach einem der vorhergehenden Ansprüche,
wobei die erste Trennstelle (200at) des ersten Rotorblattsegments (200a) einen ersten Gurtabschnitt (281as) aufweist, der geschäftet ausgebildet ist,
wobei die zweite Trennstelle (200bt) des zweiten Rotorblattsegments (200b) einen zweiten Gurtabschnitt (281bs) aufweist, der geschäftet ausgebildet ist,
wobei das Verbindungselement (300) ein, vorzugsweise beidseitig geschäftet ausgebildetes, Gurtzwischenelement (380, 381, 382) aufweist, wobei das Gurtzwischenelement beim Anordnen (450) des Verbindungselements zwischen dem ersten Gurtabschnitt und dem zweiten Gurtabschnitt angeordnet wird, sodass vorzugsweise der erste Gurtabschnitt, das Gurtzwischenelement und das zweite Gurtabschnitt einen Gurt des Rotorblatts (200) ausbilden,
wobei vorzugsweise das Gurtzwischenelement eine Länge (L1) von mindestens 2 m, vorzugsweise mindestens 3 m, besonders bevorzugt mindestens 4 m, insbesondere mindestens 5 m, aufweist,
wobei vorzugsweise das Gurtzwischenelement (380, 381, 382) einen ersten geschäftet ausgebildeten Gurtzwischenelementabschnitt (381a) aufweist, der ein Schäftverhältnis von höchstens 1:30, vorzugsweise höchstens 1:40, besonders bevorzugt höchstens 1:50, insbesondere höchstens 1:60, aufweist, und/oder von mindestens 1:300, vorzugsweise mindestens 1:250, besonders bevorzugt mindestens 1:225, insbesondere mindestens 1:200, aufweist,
wobei vorzugsweise das Gurtzwischenelement (380, 381, 382) einen zweiten geschäftet ausgebildeten Gurtzwischenelementabschnitt (381b) aufweist, der ein Schäftverhältnis von höchstens 1:30, vorzugsweise höchstens 1:40, besonders bevorzugt höchstens 1:50, insbesondere höchstens 1:60, aufweist, und/oder von mindestens 1:300, vorzugsweise mindestens 1:250, besonders bevorzugt mindestens 1:225, insbesondere mindestens 1:200, aufweist.

6. Verfahren nach einem der vorhergehenden Ansprüche,
wobei das Gurtzwischenelement (380, 381, 382) übereinandergeschichtete trockene Faserhalbzeuge, insbesondere trockene Fasergelege, umfasst, die vor dem Durchführen des Infusionsverfahrens noch nicht mit Harz imprägniert sind, wobei beim Durchführen (460) des Infusionsverfahrens die Fasern des Gurtzwischenelements des Verbindungselements mit Harz imprägniert werden.

7. Verfahren nach einem der vorhergehenden Ansprüche,
wobei das Verbindungselement (300) aufweist:
- einen Rotorblattschalenaußenseitenabschnitt (310), der vorzugsweise trockene Fasern umfasst, wobei der Rotorblattschalenaußenseitenabschnitt vorzugsweise geschäftet ausgebildet ist, und/oder
- einen Kernmaterialabschnitt (315), der vorzugsweise mit dem Rotorblattschalenaußenseitenabschnitt (310) verbunden ist, wobei der Kernmaterialabschnitt (315) vorzugsweise geschäftet ausgebildet ist, und/oder
- einen Rotorblattinnenseitenabschnitt (311), der vorzugsweise trockene Fasern umfasst, wobei der Rotorblattinnenseitenabschnitt vorzugsweise geschäftet ausgebildet ist, wobei der Rotorblattinnenseitenabschnitt vorzugsweise mit dem Kernmaterialabschnitt (315) verbunden ist.

8. Verfahren nach einem der vorhergehenden Ansprüche,
wobei sich das Verbindungselement (300, 300a) in Querrichtung (Q) entlang einer ersten Rotorblattschale, vorzugsweise in Form einer Saugseitenrotorblattschale (210), des Rotorblatts (200) erstreckt,
wobei vorzugsweise ein weiteres Verbindungselement (300, 300b) vorgesehen ist, dass sich in Querrichtung entlang einer zweiten Rotorblattschale, vorzugsweise in Form einer Druckseitenrotorblattschale (220), des Rotorblatts erstreckt.

9. Verfahren nach einem der vorhergehenden Ansprüche,
wobei das erste Rotorblattsegment (200a) und das zweite Rotorblattsegment (200b) getrennt voneinander zu einem Aufstellort transportiert werden,
wobei vorzugsweise das erste Rotorblattsegment (200a) und das zweite Rotorblattsegment (200b) und das Verbindungselement (300, 300a), und vorzugsweise ein weiteres Verbindungselement (300, 300b) mittels Durchführen (460) des Infusionsverfahrens an dem Aufstellort miteinander verbunden werden.

10. Verfahren nach einem der vorhergehenden Ansprüche,
wobei während des Durchführens (460) des Infusionsverfahrens der erste geschäftete Verbindungsabschnitt, der zweite geschäftete Verbindungsabschnitt, der erste geschäftete Abschnitt und der zweite geschäftete Abschnitt luftdicht, insbesondere mittels einer Vakuumfolie, gegen die Umgebung abgedichtet sind.

11. Verbindungselement (300) zum Verbinden eines ersten Rotorblattsegments (200a) und eines zweiten Rotorblattsegments (200b) eines Rotorblatts (200) für eine Windenergieanlage (100), das Verbindungselement (300) umfassend
- einen ersten geschäfteten Verbindungsabschnitt (310as, 311as, 315as, 381as) zur Verbindung mit einem ersten geschäfteten Abschnitt einer ersten Trennstelle eines ersten Rotorblattsegments (200a) und
- einen zweiten geschäfteten Verbindungsabschnitt (310bs, 311bs, 315bs, 381bs) zur Verbindung mit einem zweiten geschäfteten Abschnitt einer zweiten Trennstelle eines zweiten Rotorblattsegments (200b),
wobei das Verbindungselement (300) derart ausgebildet und anordenbar ist, dass der erste geschäftete Verbindungsabschnitt an dem ersten geschäfteten Abschnitt der ersten Trennstelle des ersten Rotorblattsegments anliegt und der zweite geschäftete Verbindungsabschnitt an dem zweiten geschäfteten Abschnitt der zweiten Trennstelle des zweiten Rotorblattsegments anliegt.

12. Verbindungselement (300) nach dem vorhergehenden Anspruch,
wobei das Verbindungselement (300) vor einem Verbinden mit dem ersten Rotorblattsegment und dem zweiten Rotorblattsegment trockene Faserhalbzeuge, insbesondere trockene Fasergelege, umfasst, und/oder
wobei das Verbindungselement (300) Kernmaterial umfasst, wobei vorzugsweise das Kernmaterial zumindest abschnittsweise geschäftet ausgebildet ist.

13. Verbindungselement (300) nach dem vorhergehenden Anspruch,
wobei das Verbindungselement (300) ein, vorzugsweise beidseitig geschäftet ausgebildetes, Gurtzwischenelement (380, 381, 382) aufweist, das vorzugsweise ausgebildet ist, um bei einem Anordnen des Verbindungselements zwischen einem ersten Gurtabschnitt des ersten Rotorblattsegments und einem zweiten Gurtabschnitt des zweiten Rotorblattsegments einen Gurt auszubilden,
wobei vorzugsweise das Gurtzwischenelement eine Länge (L1) von mindestens 2 m, vorzugsweise mindestens 3 m, besonders bevorzugt mindestens 4 m, insbesondere mindestens 5 m, aufweist, und/oder
wobei das Gurtzwischenelement (380, 381, 382) einen ersten geschäftet ausgebildeten Gurtzwischenelementabschnitt (381a) aufweist, der ein Schäftverhältnis von höchstens 1:30, vorzugsweise höchstens 1:40, besonders bevorzugt höchstens 1:50, insbesondere höchstens 1:60, aufweist, und/oder von mindestens 1:300, vorzugsweise mindestens 1:250, besonders bevorzugt mindestens 1:225, insbesondere mindestens 1:200, aufweist, und/oder
wobei das Gurtzwischenelement (380, 381, 382) einen zweiten geschäftet ausgebildeten Gurtzwischenelementabschnitt (381b) aufweist, der ein Schäftverhältnis von höchstens 1:30, vorzugsweise höchstens 1:40, besonders bevorzugt höchstens 1:50, insbesondere höchstens 1:60, aufweist, und/oder von mindestens 1:300, vorzugsweise mindestens 1:250, besonders bevorzugt mindestens 1:225, insbesondere mindestens 1:200, aufweist, und/oder
wobei vorzugsweise das Gurtzwischenelement (380, 381, 382) übereinandergeschichtete trockene Faserhalbzeuge, insbesondere trockene Fasergelege, umfasst.

14. Verbindungselement nach einem der vorhergehenden Ansprüche,
wobei das Verbindungselement (300) aufweist:
- einen Rotorblattschalenaußenseitenabschnitt (310), der vorzugsweise trockene Fasern umfasst, wobei der Rotorblattschalenaußenseitenabschnitt vorzugsweise geschäftet ausgebildet ist, und/oder
- einen Kernmaterialabschnitt (315), der vorzugsweise mit dem Rotorblattschalenaußenseitenabschnitt (310) verbunden ist, wobei der Kernmaterialabschnitt (315) vorzugsweise geschäftet ausgebildet ist, und/oder
- einen Rotorblattinnenseitenabschnitt (311), der vorzugsweise trockene Fasern umfasst, wobei der Rotorblattinnenseitenabschnitt vorzugsweise geschäftet ausgebildet ist, wobei der Rotorblattinnenseitenabschnitt vorzugsweise mit dem Kernmaterialabschnitt (315) verbunden ist.

15. Rotorblatt (200) für eine Windenergieanlage, das Rotorblatt umfassend
- ein Verbindungelement nach einem der vorhergehenden Ansprüche, vorzugsweise zwei Verbindungselemente nach einem der vorhergehenden Ansprüche,
- ein erstes Rotorblattsegment (200a), das vorzugsweise eine erste Trennstelle (200at) aufweist, die einen ersten geschäfteten Abschnitt (210as, 211as, 215as, 281as) aufweist,
- ein zweites Rotorblattsegment (200b), das vorzugsweise eine zweite Trennstelle (200bt) aufweist, die einen zweiten geschäfteten Abschnitt (210bs, 211bs, 215bs, 281bs) aufweist,
wobei das Verbindungselement (300) mit dem ersten Rotorblattsegment (200a) und mit dem zweiten Rotorblattsegment (200b) verbunden ist, wobei vorzugsweise die Verbindung erhalten ist durch Durchführen eines Infusionsverfahrens, vorzugsweise Vakuuminfusionsverfahrens,
wobei das Rotorblatt vorzugsweise umfasst:
- einen ersten Gurt (281), der sich entlang einer ersten Rotorblattschale des Rotorblatts erstreckt,
- einen zweiten Gurt (282), der sich entlang einer zweiten Rotorblattschale des Rotorblatts erstreckt,
- und vorzugsweise mindestens einen Steg (231, 232), umfassend einen ersten Verbindungsabschnitt (231a) und einen zweiten Verbindungsabschnitt (231b), wobei der erste Verbindungsabschnitt (231a) des Stegs (231, 232) mit der Gurtinnenseite (281i) des ersten Gurts (281) verbunden ist und der zweite Verbindungsabschnitt (231b) des Stegs (231, 232) mit der Gurtinnenseite (282i) des zweiten Gurts (282) verbunden ist.

16. Windenergieanlage (100), umfassend mindestens ein Rotorblatt (200) nach dem vorhergehenden Anspruch, vorzugsweise drei Rotorblätter (200) nach dem vorhergehenden Anspruch.
